# EUROPEAN PATENT APPLICATION

(11) **EP 4 398 455 A1**
(43) Date of publication of application: **10.07.2024**
(21) Application number: 24150454.7
(22) Date of filing: 04.01.2024
(51) Int. Cl.: H02K 1/18, B62K 11/00, B62M 6/65, H02K 1/2791, H02K 21/22, B60B 21/10, B60C 7/24, H02K 5/173

(54) **MOTOR FOR UNICYCLE AND UNICYCLE**

(30) Priority: 05.01.2023 CN 202310014442
(71) Applicant: Shenzhen King Song Intelligence Technology Co., Ltd., Shenzhen Guangdong (CN)
(72) Inventor: LV, Fuxing, Gushi County, Henan (CN); TANG, Peng, Shihua, Hubei (CN)
(74) Representative: Ipey

(57) **Abstract**

A motor for a unicycle includes a motor main shaft, a stator mechanism disposed on the motor main shaft, and a rotor mechanism disposed on the motor main shaft. The motor includes a bearing sleeved on the motor main shaft, and the rotor mechanism is connected with the motor main shaft through the bearing, and the stator mechanism includes a stator support, and an electric core mechanism is disposed on the stator support. Since the electric core mechanism is disposed on the stator mechanism, and the stator mechanism and the electric core mechanism are integrated together, an overall compact structure of the motor is realized. Moreover, the electric core mechanism is disposed on the stator support, effectively ensuring that the electric core mechanism is integrated in the motor without affecting the normal rotation of the motor, and further providing a good protection for the electric core mechanism.

## Description

### TECHNICAL FIELD

The present disclosure relates to a technical field of unicycles, and in particular to a motor for a unicycle and the unicycle.

### BACKGROUND

With steady development of electric vehicle industry, more and more people begin to use electric vehicles. There are various types of electric vehicles, in which the unicycles are widely praised once on the market. Most of the unicycles driven by electric power require good driving skills, so drivers can maintain balance in front, rear, left and right directions. In order to maintain a balance of a body of the unicycles, the unicycles driven by electric power generally adopt a self-balancing system including a gyroscope and an acceleration sensor, etc., so that the driving skills pf the drivers for the unicycles are not as high as the driving skills of the drivers for a human-driven scooter. At present, a structure of the unicycles on the market is basically adopts a structure disclosed in Chinese patent application No. CN 106184543 A, i.e., an electric core and a control device are disposed outside a tire, and the electric core and the control device are fixed on two sides or a top of the tire after being shielded by a shell, so that an overall volume of the unicycles is relatively large, and the electric core is easily impacted, which affects safety of the unicycles.

### SUMMARY

A purpose of the present disclosure is to provide a motor for a unicycle and the unicycle with a small volume and high safety to solve the technical problems in the prior art.

The purpose of the present disclosure is achieved through following technical solutions:

The motor for the unicycle comprises a motor main shaft, a stator mechanism disposed on the motor main shaft, and a rotor mechanism disposed on the motor main shaft.

The motor comprises a bearing sleeved on the motor main shaft. The rotor mechanism is connected with the motor main shaft through the bearing. The stator mechanism comprises a stator support. An electric core mechanism is disposed on the stator support.

Furthermore, the stator mechanism comprises a stator core and a stator winding. The stator winding is disposed on the stator core. The stator support comprises a support frame, a fixing ring disposed on an outer side of the stator support, and a shaft sleeve ring disposed on an inner side of the stator support. The support frame connects the shaft sleeve ring with the fixing ring. The stator core is disposed on the fixing ring. The stator support is fixed on the motor main shaft through the shaft sleeve ring. A plurality of installing positions for the electric core mechanism are evenly spaced and defined on the support frame along a circumferential direction of the motor main shaft.

Furthermore, the electric core mechanism comprises an electric control board and an electric core support. The electric core support is fixedly disposed on the plurality of installing positions for the electric core mechanism. An electric core disposed on the electric core support is connected with the electric control board.

Furthermore, at least one limiting hole and at least one fixing hole are defined on the electronic control board. The electric control board is sleeved on the motor main shaft through the at least one limiting hole. The electric control board is fixed on the electric core support through the at least one fixing hole. The electric core is directly connected with the electric control board.

Furthermore, the rotor mechanism comprises rotor supports and a rotor sleeve ring. The rotor supports are disposed on the motor main shaft through the bearing. Permanent magnets are evenly spaced and disposed on an inner side of the rotor sleeve ring along the circumferential direction of the motor main shaft. A position of the stator winding is matched with positions of the permanent magnets. The rotor supports are respectively fixedly disposed on two sides of the rotor sleeve ring.

Furthermore, another purpose of the present disclosure is to provide the unicycle including the motor for the unicycle, a housing, and a tire. The motor for the unicycle is disposed in the housing. Limiting portions are disposed on an outer surface of the housing. Mating portions matched with the limiting portions are disposed on an inner surface of the tire. The mating portions are respectively clamped with the limiting portions.

Furthermore, the limiting portions comprise limiting protruding blocks. The limiting protruding blocks are evenly spaced apart and each of the limiting protruding blocks is disposed on a corresponding limiting portion. Each of the limiting protruding blocks defines a limiting protrusion. The mating portions comprise mating protruding blocks. The mating protruding blocks are evenly spaced apart, and each of the mating protruding blocks is disposed on a corresponding mating portion. Each of the mating protruding block defines a mating slot, and each mating slot is matched with a corresponding limiting protrusion.

Furthermore, the tire comprises a ball tire, and a tire lining. The mating protruding blocks are disposed on an inner surface of the tire lining. Limiting ribs are evenly spaced and disposed on an outer surface of the tire lining. Limiting teeth matched with the limiting ribs are disposed on an inner surface of the ball tire.

Furthermore, the unicycle comprises latches. The limiting protruding blocks are respectively clamped with a corresponding mating slot. Each of the latches is inserted between each limiting protruding block and a corresponding mating protruding block.

Furthermore, the unicycle further comprises pedal brackets respectively fixed on two sides of the motor main shaft. A pedal is disposed on each of the pedal brackets, and each pedal is connected with a corresponding pedal bracket through a rotary shaft. A decorative plate is disposed on each pedal.

Since the electric core mechanism is disposed on the stator mechanism, and the stator mechanism and the electric core mechanism are integrated together, an overall compact structure of the motor is realized, and an overall size of the motor is further reduced. Moreover, the electric core mechanism is disposed on the stator support, which effectively ensures that the electric core mechanism is integrated in the motor without affecting the normal rotation of the motor, further provides a good protection for the electric core mechanism and well ensures use safety of the motor. Meanwhile, the electric core mechanism is integrated with the stator mechanism, which simplifies a layout of accessories and circuits of the motor, and makes production and processing of the motor convenient.

### BRIEF DESCRIPTION OF DRAWINGS

FIG. 1 is a structural schematic diagram of a motor for a unicycle according to one embodiment of the present disclosure.
FIG. 2 is a structural schematic diagram of the unicycle according to one embodiment of the present disclosure.
FIG. 3 is another structural schematic diagram of the unicycle according to one embodiment of the present disclosure.

Reference numbers in the drawings: unicycle 10; housing 11; limiting portions 111; limiting protruding blocks 112; limiting protrusion 113; tire 12; ball tire 121; limiting teeth 122; tire lining 13; mating portions 131; mating protruding blocks 132; mating slot 133; limiting ribs 134; latches 14; pedal brackets 15; pedal 16; decorative plate 17; motor 20; motor main shaft 21; stator mechanism 22; stator core 221; stator winding 222; stator support 223; support frame 224; fixing ring 225; shaft sleeve ring 226; installing positions 227; bearing 23; electric core mechanism 30; electric control board 31; electric core support 32; electric core 33; rotor mechanism 40; rotor supports 41; rotor sleeve ring 42; permanent magnets 43.

### DETAILED DESCRIPTION OF EMBODIMENTS

Specific structures and functional details disclosed herein are merely representative, and are intended to describe the objectives of the exemplary embodiments of this application. However, this application may be specifically implemented in many alternative forms, and should not be construed as being limited to the embodiments set forth herein.

In the description of this application, it should be understood that orientation or position relationships indicated by the terms such as "center", "transverse", "on", "below", "left", "right", "vertical", "horizontal", "top", "bottom", "inside", and "outside" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of this application. In addition, the terms such as "first" and "second" are used only for the purpose of description, and should not be understood as indicating or implying the relative importance or implicitly specifyi1ng the number of the indicated technical features. Therefore, a feature defined by "first" or "second" can explicitly or implicitly include one or more of said features. In the description of this application, unless otherwise stated, "a plurality of" means two or more than two. In addition, the terms "include", "comprise" and any variant thereof are intended to cover non-exclusive inclusion.

In the description of the application, it should be noted that unless otherwise explicitly specified or defined, the terms :such as "mount", "install", "connect", and "connection" should be understood in a broad sense. For example, the connection may be a fixed connection, a detachable corn1ection, or an integral connection; or the connection may be a mechanical connection or an electrical connection; or the connection may be a direct connection, an indirect connection through an intermediary, or internal communication between two components. Persons of ordinary skill in the art may understand the specific meanings of the foregoing terms in this application according to specific situations.

The terminology used herein is for the purpose of describing specific embodiments only and is not intended to be limiting of exemplary embodiments. As used herein, the singular forms "a", "an" and "the" are intended to include the plural forms as well, unless the context clearly indicates otherwise. It should be further understood that the terms "include" and/or "comprise" when used in this specification, specify the presence of stated features, integers, steps, operations, elements, and/or components, but do not preclude the presence or addition of one or more other features, integers, steps, operations, elements, components, and/or combinations thereof.

In the drawings, units with similar structures are represented by the same reference numbers.

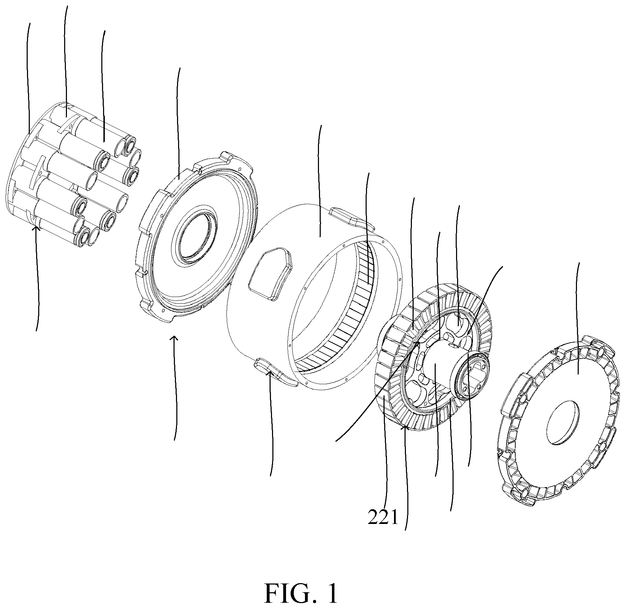

The present disclosure is further described below with reference to FIGS. 1 -3 and the optional embodiments.

As shown in FIG. 1, the present disclosure provides a motor 20 for a unicycle including a motor main shaft 21, a stator mechanism 22 disposed on the motor main shaft 21, and a rotor mechanism 40 disposed on the motor main shaft 21. The motor 20 comprises a bearing 23 sleeved on the motor main shaft 21. The rotor mechanism 40 is connected with the motor main shaft 21 through the bearing 23. The stator mechanism 22 comprises a stator support 223. An electric core mechanism 30 is disposed on the stator support 223.

Since the electric core mechanism 30 is disposed on the stator mechanism 22, and the stator mechanism 22 and the electric core mechanism 30 are integrated together, an overall compact structure of the motor 20 is realized, and an overall size of the motor 20 is further reduced. Moreover, the electric core mechanism 30 is disposed on the stator support 223, which effectively ensures that the electric core mechanism 30 is integrated in the motor 20 without affecting the normal rotation of the motor 20, further provides a good protection for the electric core mechanism 30 and well ensures use safety of the motor 20. Meanwhile, the electric core mechanism 30 is integrated with the stator mechanism 22, which simplifies a layout of accessories and circuits of the motor 20, and makes production and processing of the motor 20 convenient.

The stator mechanism 22 comprises a stator core 221 and a stator winding 222. The stator winding 222 is disposed on the stator core 221. The stator support 223 comprises a support frame 224. A fixing ring 225 disposed on an outer side of the stator support 223. A shaft sleeve ring 226 disposed on an inner side of the stator support 223. The support frame 223 connects the shaft sleeve ring 226 with the fixing ring 225. The stator core 221 is disposed on the fixing ring 225. The stator support 223 is fixed on the motor main shaft 21 through the shaft sleeve ring 226. A plurality of installing positions 227 for the electric core mechanism 30 are evenly spaced and defined on the support frame 224 along a circumferential direction of the motor main shaft 21. The plurality of installing positions 227 for the electric core mechanism facilitate the installing of the electric core mechanism 30, so that the electric core mechanism 30 can be well installed on the stator support 223 disposed in the stator mechanism 22. The electric core mechanism 30 is integrated with the stator mechanism 22, which not only meets the use and production requirements, but also provides the good protection for the electric core mechanism 30. The plurality of installing positions 227 for the electric core mechanism 30 are generally through holes, an overall compact structure of the motor 20 is realized, and an overall size and weight of the stator mechanism 22 is reduced, so that the motor 20 is easy to carry. Meanwhile, the plurality of installing positions 227 for the electric core mechanism 30 are evenly spaced and disposed on the support frame 224, so that when the electric core mechanism 30 is disposed on the plurality of installing positions 227 for the electric core mechanism 30, masses distribution in the circumferential direction of the motor main shaft 21 are uniform, which does not not affect normal operation of the motor 20.

The electric core mechanism 30 comprises an electric control board 31, and an electric core support 32. The electric core support 32 is fixedly disposed on the plurality of installing positions 227 for the electric core mechanism 30. An electric core 33 disposed on the electric core support 32 is connected with the electric control board 31. The electric core 33 is fixed and limited through the above arrangement of the electric core support 32, which provides good protection for the electric core 33. The electric control board 31 controls and manages the electric core 33 well, and the electric control board 31 is disposed in the motor 20, which further provides the good protection for the electric control board 31, simplifies the layout of accessories and circuits of the motor 20, and makes the production and the processing of the motor 20 convenient.

At least one limiting hole and at least one fixing hole are defined on the electronic control board 31. The electric control board 31 is sleeved on the motor main shaft 21 through the at least one limiting hole. The electric control board 31 is fixed on the electric core support 32 through the at least one fixing hole. The electric core 33 is directly connected with the electric control board 31. The electronic control board 31 is directly connected with the electric core 33, which reduces the number of wiring, makes the overall structure of the motor 20 more compact, and provides good protection and maintenance for the electric core 33 and the electronic control board 31.

The rotor mechanism 40 comprises rotor supports 41 and a rotor sleeve ring 42. The rotor supports 41 are disposed on the motor main shaft 21 through the bearing 23. Permanent magnets 43 are evenly spaced and disposed on an inner side of the rotor sleeve ring 42 along the circumferential direction of the motor main shaft. A position of the stator winding is matched with positions of the permanent magnets. The rotor supports 41 are respectively fixedly disposed on two sides of the rotor sleeve ring 42. The rotor supports 41 are fixedly connected with the rotor sleeve ring 42 to form a relatively strong integral structure, which further provides a good protection for the electric core mechanism 30 and the stator mechanism 22. The rotor sleeve ring 42 and the rotor supports 41 generally adopt metal structures, which provides the good protection for the electric core mechanism 30 and the stator mechanism 22.

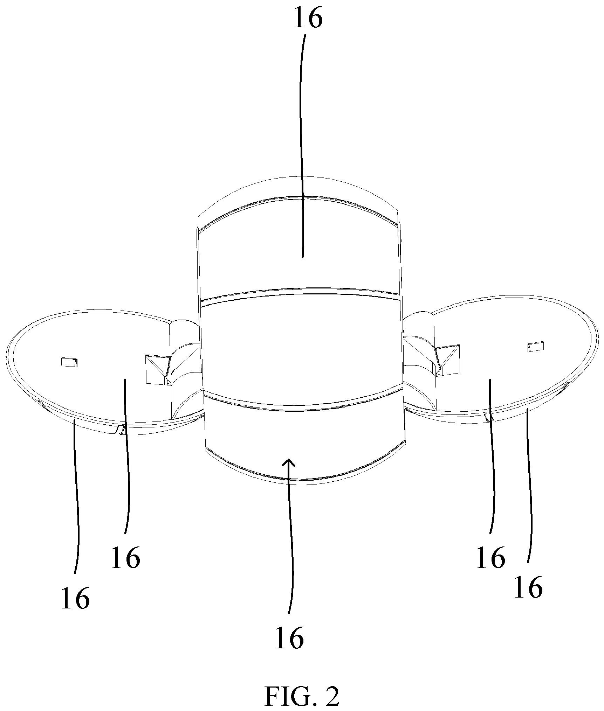

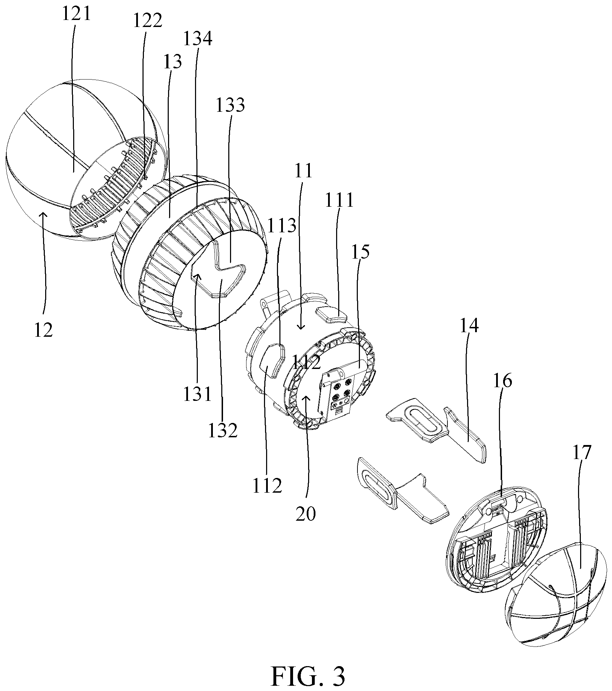

As shown in FIG. 2 and FIG. 3, another purpose of the present disclosure is to provide the unicycle 10 including the motor 20 for the unicycle 10, a housing 11, and a tire 12. The motor 20 for the unicycle is disposed in the housing 11. Limiting portions 111 are disposed on an outer surface of the housing 11. Mating portions 131 matched with the limiting portions 111 are disposed on an inner surface of the tire 12. The mating portions 131 are respectively clamped with the limiting portions 111. The limiting portions 111 disposed on the housing 11 are respectively limited and clamped with the mating portions 131 disposed on the tire 12, which facilitates rapid dismounting and installing of the tire 12, and provides a good protection for whole motor 20. Compared with a conventional honeycomb tire that need to be loaded through a special tool to expand the tire, the limiting portions 111 disposed on the housing 11 are clamped and matched with the mating portions 131 disposed on the tire 12, which facilitates maintenance of the tire 12.

The limiting portions 111 disposed on the housing 11 are clamped and matched with the mating portions 131 disposed on the tire 12, so the electric core 33, the electric control board 31, and the motor 20 are integrated together to be an independent complex, which reduces a weight and a volume of the motor 20, provides the good protection and maintenance for the electric core 33 and the electric control board 31, reduces the number of wiring, and achieves a compact structure of the unicycle 10 without affecting functions of the unicycle 10. Optionally, the housing 11 is a metal housing disposed separately, or may be integrally formed with a shell (or the rotor mechanism 40) on a outermost side of the motor 20.

The limiting portions 111 comprise limiting protruding blocks 112. The limiting protruding blocks 112 are evenly spaced apart, and each of the limiting protruding blocks 112 is disposed on a corresponding limiting portion 111. Each of the limiting protruding blocks 112 defines a limiting protrusion. The mating portions 131 comprise mating protruding blocks 132. The mating protruding blocks 132 are evenly spaced apart, and each of the mating protruding blocks 132 is disposed on a corresponding mating portion 131. Each of the mating protruding block 132 defines a mating slot 133. Each mating slot 133 is matched with a corresponding limiting protrusion 113. Each limiting protrusion 113 is limited and clamped with each mating slot 133, which facilitates the rapid dismounting and the installing of the tire 12, achieves quick replacement of the tire 12, and reduces workload. Moreover, by arrangements of each limiting protrusion 113 and each matching slot 133, an overall weight of the unicycle 10 is reduced without affecting the bearing capacity of the unicycle 10 and production manufacturability.

The tire 12 comprises a ball tire 121, and a tire lining 13. The mating protruding blocks 132 are disposed on an inner surface of the tire lining 13. Limiting ribs 134 are evenly spaced and disposed on an outer surface of the tire lining 13. Limiting teeth 122 matched with the limiting ribs 134 are disposed on an inner surface of the ball tire 121. To ensure that a weight of the tire 12 is controlled as light as possible, the tire 12 is divided into the ball tire 121 and the tire lining 13, so the weight of the tire 12 is reduced by a structure of the tire lining 13 while ensuring reliability and durability of the unicycle 10.

The unicycle 10 comprises latches 14. The limiting protruding blocks 113 are respectively clamped with a corresponding mating slot 133. Each of the latches 14 is inserted between each limiting protruding block 112 and a corresponding mating protruding block 132. By using a method of inserting in the latches 14 after rotating and locking the tire 12 and the housing 11, the tire 12 is fixed with the housing 11, achieveing synchronous rotation of the tire 12 and the housing 11. When the tire 12 needs to be disassembled, a reverse operation is needed. Specifically, the latches 14 are firstly pushed out, and then the tire 12 is directly pulled out after the tire is rotated for 30 degrees, which achieves quick replacement of the tire 12, further improves work efficiency and reduces workload. When replacing a tire of an ordinary unicycle 10, a whole body and a large numbers of accessories of the ordinary unicycle 10 needs to be disassembled, which causes large workload and low work efficiency. On the contrary, the present disclosure achieves quick replacement of the tire 12 and improves the work efficiency, meanwhile, the mentioned-above structures ensure reliable connection between the tire 12 and the housing 11 during use, which avoids sliding of the tire 12 with respect to the housing 11.

The unicycle 10 further comprises pedal brackets 15 respectively fixed on two sides of the motor main shaft 21. A pedal 16 is disposed on each of the pedal brackets 15, and each pedal 16 is connected with a corresponding pedal bracket 15 through a rotary shaft, which facilitates opening or storage of each pedal 16 by rotating. A decorative plate 17 is disposed on each pedal 16. When each pedal 16 is rotated for storage, the decorative plate 17 is matched with the ball tire 121, so that an overall appearance of the unicycle 10 forms a ball in a storage state. The ball tire 121 may be made into a style of a ball such as a basketball, a football, a volleyball, etc.

The detailed description of the present disclosure is described above in combination with specific preferred embodiments, which should not be regarded as limiting the protection scope of the present disclosure. It should be noted that, for the person of ordinary skill in the art, improvements are made without departing from concepts of the present disclosure, but these are all within the protection scope of the present disclosure.

## Claims

1. A motor for a unicycle, comprising:
a motor main shaft;
a stator mechanism disposed on the motor main shaft; and
a rotor mechanism disposed on the motor main shaft;
wherein the motor comprises a bearing sleeved on the motor main shaft; the rotor mechanism is connected with the motor main shaft through the bearing; the stator mechanism comprises a stator support; an electric core mechanism is disposed on the stator support.

2. The motor for the unicycle according to claim 1, wherein the stator mechanism comprises a stator core and a stator winding; the stator winding is disposed on the stator core; the stator support comprises a support frame; a fixing ring disposed on an outer side of the stator support; a shaft sleeve ring disposed on an inner side of the stator support; the support frame connects the shaft sleeve ring with the fixing ring; the stator core is disposed on the fixing ring; the stator support is fixed on the motor main shaft through the shaft sleeve ring; a plurality of installing positions for the electric core mechanism are evenly spaced and defined on the support frame along a circumferential direction of the motor main shaft.

3. The motor for the unicycle according to claim 2, wherein the electric core mechanism comprises an electric control board and an electric core support; the electric core support is fixedly disposed on the plurality of installing positions for the electric core mechanism; an electric core disposed on the electric core support is connected with the electric control board.

4. The motor for the unicycle according to claim 3, wherein at least one limiting hole and at least one fixing hole are defined on the electronic control board; the electric control board is sleeved on the motor main shaft through the at least one limiting hole; the electric control board is fixed on the electric core support through the at least one fixing hole; the electric core is directly connected with the electric control board.

5. The motor for the unicycle according to claim 2, wherein the rotor mechanism comprises rotor supports and a rotor sleeve ring; the rotor supports are disposed on the motor main shaft through the bearing; permanent magnets are evenly spaced and disposed on an inner side of the rotor sleeve ring along the circumferential direction of the motor main shaft; a position of the stator winding is matched with positions of the permanent magnets; the rotor supports are respectively fixedly disposed on two sides of the rotor sleeve ring.

6. A unicycle, comprising the motor for the unicycle according to claim 1, a housing, and a tire, wherein the motor for the unicycle is disposed in the housing; limiting portions are disposed on an outer surface of the housing; mating portions matched with the limiting portions are disposed on an inner surface of the tire; the mating portions are respectively clamped with the limiting portions.

7. The unicycle according to claim 6, wherein the limiting portions comprise limiting protruding blocks; the limiting protruding blocks are evenly spaced apart and each of the limiting protruding blocks is disposed on a corresponding limiting portion; each of the limiting protruding blocks defines a limiting protrusion; the mating portions comprise mating protruding blocks; the mating protruding blocks are evenly spaced apart; each of the mating protruding blocks is disposed on a corresponding mating portion; each of the mating protruding block defines a mating slot; each mating slot is matched with a corresponding limiting protrusion.

8. The unicycle according to claim 7, wherein the tire comprises a ball tire, and a tire lining; the mating protruding blocks are disposed on an inner surface of the tire lining; limiting ribs are evenly spaced and disposed on an outer surface of the tire lining; limiting teeth matched with the limiting ribs are disposed on an inner surface of the ball tire.

9. The unicycle according to claim 7, wherein the unicycle comprises latches; the limiting protruding blocks are respectively clamped with a corresponding mating slot; and each of the latches is inserted between each limiting protruding block and a corresponding mating protruding block.

10. The unicycle according to claim 6, wherein the unicycle further comprises pedal brackets respectively fixed on two sides of the motor main shaft; a pedal is disposed on each of the pedal brackets; each pedal is connected with a corresponding pedal bracket through a rotary shaft; and a decorative plate is disposed on each pedal.
